# EUROPEAN PATENT APPLICATION

(11) **EP 3 659 984 A2**
(43) Date of publication of application: **03.06.2020**
(21) Application number: 18839257.5
(22) Date of filing: 19.06.2018
(51) Int. Cl.: C03C 17/36

(54) **LOW-EMISSIVITY GLASS**

(30) Priority: 25.07.2017 KR 20170093847
(71) Applicant: KCC Corporation, Seoul 06608 (KR)
(72) Inventor: PARK, Joon Young, Yeoju-si Gyeonggi-do 12646 (KR); KANG, Hyun Min, Suwon-si Gyeonggi-do 16543 (KR); KIM, Jin Yong, Suwon-si Gyeonggi-do 16709 (KR); OH, Young Hoon, Seoul 01707 (KR); YOON, Sung Kun, Yeoju-si Gyeonggi-do 12646 (KR); YU, Bo Na, Gunsan-si Jeollabuk-do 54088 (KR); LEE, Hyoun Joo, Busan 47239 (KR); LEE, Je Hyang, Seoul 05254 (KR); KIM, Min Ju, Seoul 01746 (KR)
(74) Representative: Cabinet Laurent & Charras
(86) International application number: PCT/KR2018/006899
(87) International publication number: WO 2019/022383

(57) **Abstract**

The present invention relates to a low-emissivity glass comprising: a glass substrate; a first dielectric layer formed on the glass substrate; a metal layer formed on the first dielectric layer; an absorbent layer formed on the metal layer; a second dielectric layer formed on the absorbent layer; and a coating layer formed on the second dielectric layer and containing Zr, whereby a low-emissivity glass having good and excellent handling and long-term storage properties is provided.

## Description

### Technical Field

The present invention relates to low-emissivity glass having excellent durability, handling and long-term storage properties.

### BACKGROUND ART

By being specially coated on a glass surface, low-emissivity glass reflects solar radiant heat in the summer and preserves infrared rays generated from an indoor heater in the winter, thereby increasing the energy-saving effect of a building.

Such low-emissivity glass is manufactured largely in two ways. One is a method in which a semiconductor precursor uniformly applied on a hot glass ribbon during a glass manufacturing process such that the precursor is decomposed and coated by glass heat. The other is a method in which coating is performed through sputtering of a metal target in a vacuum chamber.

In the case of the former, manufacturing is performed by coating an SnO₂:F material in general, and due to the deposition at a high temperature and the use of a relatively stable oxide, the coating degree of a coating film has very strong properties but low emissivity properties. In the case of the latter, manufacturing is performed by coating a metal in the form of a film, and as the metal, silver is mainly used in consideration of price, color, and low emissivity properties. In addition, low-emissivity glass is manufactured in the form of a glass substrate/dielectric/silver/dielectric/protective layer due to the properties of silver having low durability. However, due to the physical deposition and the use of relatively unstable silver, a coating layer is weak, and thus durability is poor.

Accordingly, various methods have been proposed for the purpose of improving a coating layer of low-emissivity glass. For example, in the case of European Registration Patent No. 1,080,245, a Zn oxide was added with Sn to be used as a dielectric, a Ti layer was used as a protective layer for silver, and an additional layer was used as a top protective layer. In the case of U.S. Registration Patent No. 5,834,103, a Zn oxide was used as a dielectric, Ti was used as a protective layer for silver, and an Si nitride was used as the top protective layer. In the case of U.S. Registration Patent No. 6,010,602, a Zn-Sn oxide was used as a dielectric, Ti was used as a protective layer for silver, and TiO₂ was used as a top protective layer. As described above, inventions using a variety of materials and various structures have been made to improve the durability of metal-based low-emissivity glass. However, in a region with a rainy season of high temperatures and humidity, durability, especially moisture resistance, is not good. Therefore, there is a need for research to solve problems such as shining and color change defects due to deterioration of a coating film when stored for a long time in a high temperature and high humidity region.

### DISCLOSURE OF THE INVENTION

### TECHNICAL PROBLEM

An aspect of the present invention provides low-emissivity glass having excellent handling properties such as cold resistance and acid resistance and long-term storage properties in addition to durability.

### TECHNICAL SOLUTION

According to an aspect of the present invention, there is provided low-emissivity glass including a glass substrate, a first dielectric layer formed on the glass substrate, a metal layer formed on the first dielectric layer, an absorption layer formed on the metal layer, a second dielectric layer formed on the absorption layer, and a coating layer including Zr formed on the second dielectric layer.

### ADVANTAGEOUS EFFECTS

Low-emissivity glass of the present invention is excellent in handling, long-term storage, and mechanical durability, and has an advantage in that the deposition rate is excellent and stable sputtering is possible compared to conventional low-emissivity glass using TiOₓN_{y}.

### BRIEF DESCRIPTION OF THE DRAWINGS

The following drawings attached herein illustrate preferred embodiments of the present invention by example, and serve to enable technical concepts of the present invention to be further understood together with detailed description of the invention given below, and therefore the present invention should not be interpreted only with matters in such drawings.
FIG. 1 is a view showing a laminated structure of single low-emissivity glass of the present invention;
(a) to (c) of FIG. 2 are views showing specific laminated structure examples in the single low-emissivity glass of FIG. 1;
FIG. 3 is a view showing a laminated structure of a plurality of sheets of low-emissivity glass of the present invention; and
(a) to (c) of FIG. 4 are views showing specific laminated structure examples in the plurality of sheets of low-emissivity glass of FIG. 3.

Reference numerals used in the drawings are as follows.

- 10:: Glass substrate
- 20:: First dielectric layer
- 21:: Second dielectric layer
- 22:: Dielectric layer
- 20a, 21a, 22a:: Main dielectric layer
- 20b, 21b, 22b:: Sub-dielectric layer
- 30:: Metal layer
- 40, 40a, 40b:: Absorption layer
- 50:: Coating layer

### BEST MODE FOR CARRYING OUT THE INVENTION

Hereinafter, preferred embodiments of the present invention will be described with reference to the accompanying drawings. However, the present invention is not limited to the embodiments described herein. In the drawings, the thickness of layers and regions may be exaggerated for clarity. Like reference numerals refer to like elements throughout the specification. Also, in describing the present invention below, detailed descriptions of related known functions or configurations will be omitted when it is determined that the detailed descriptions may unnecessarily obscure the gist of the present invention.

Hereinafter, the present invention will be described in more detail to facilitate understanding of the present invention.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

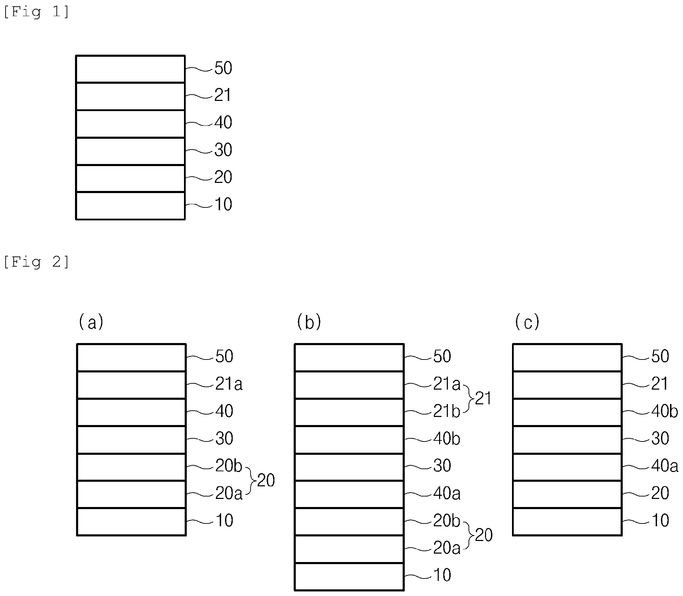

FIG. 1 is a view showing a laminated structure of single low-emissivity glass of the present invention.

Referring to FIG. 1, low-emissivity glass of the present invention includes a glass substrate 10, a first dielectric layer 20 formed on the glass substrate 10, a metal layer 30 formed on the first dielectric layer 20, an absorption layer 40 formed on the metal layer 30, a second dielectric layer 21 formed on the absorption layer 40, and a coating layer 50 including Zr formed on the second dielectric layer 21.

The glass substrate 10 serves as a base substrate of the low-emissivity glass. As the glass substrate 10, conventional glass, for example, soda lime glass, low iron glass, green disc glass, or blue disc glass which is used for building or automobiles, may be used. In addition, according to the purpose of use, glass having a thickness of 2 mm to 12 mm may be freely used. For example, transparent soda lime glass having a thickness of 5 mm or 6 mm may be used.

The first dielectric layer 20 is formed on the glass substrate 10 and serves to block oxygen or ions delivered to the metal layer 30 during heat treatment such as reinforcement and bending. The first dielectric layer 20 includes a main dielectric layer 20a and may selectively have a sub-dielectric layer 20b formed on either an upper portion or a lower portion of the main dielectric layer 20a. According to one embodiment of the present invention, the sub-dielectric layer 20b may be formed on an upper portion of the main dielectric layer 20a as shown in (a) and (b) of FIG. 2, that is, between the main dielectric layer 20a and the metal layer 30.

The main dielectric layer 20a may be formed of an Si-based nitride or nitrogen oxide containing one or more elements selected from among Al, B, Ti, Nb, Sn, and Mo, and the sub-dielectric layer 20b may be formed of a Zn-based oxide containing one or more elements selected from the group consisting of Sn, Nb, Al, Sb, Mo, Cr, Ti, and Ni.

According to one embodiment of the present invention, the main dielectric layer 20a may be SiAlNₓ, wherein x is 1.3≤x≤1.5. If x is out of the above numerical range, the deposition rate may be deteriorated due excess nitrogen (N₂). The sub-dielectric layer 20b may be ZnAlOₓ, wherein x is 0.5≤x≤3. If x is out of the above numerical range, the deposition rate may be deteriorated due excess oxygen (O₂).

The thickness of each of the main dielectric layer 20a and the sub-dielectric layer 20b may be, independently, 5-50 nm. Specifically, the thickness of the main dielectric layer 20a may be 30-50 nm, and the thickness of the sub-dielectric layer 20b may be 5-20 nm. If the thickness of the main dielectric layer 20a is less than 30 nm or the thickness of the sub-dielectric layer 20b is less than 5 nm, durability may be deteriorated. If the thickness of the main dielectric layer 20a is greater than 50 nm, or the thickness of the sub-dielectric layer 20b is greater than 20 nm, transmittance may be reduced.

According to one embodiment of the present invention, as shown in (b) and (c) of FIG. 2, an absorption layer 40a may be further included between the first dielectric layer 20 and the metal layer 30.

The metal layer 30 selectively reflects solar radiation to provide high shielding performance while serving to implement low radiation. As the metal layer 30, a metal having good conductivity may be used, and one or more selected from the group consisting of Ag, Cu, Au, Al, and Pt may be used. According to an embodiment of the present invention, a metal used as the metal layer 30 may be silver (Ag) .

The thickness of the metal layer 30 may be 5-25 nm. If the thickness of the metal layer 30 is less than 5 nm, the formation of the metal layer 30 may not be properly performed so that low radiation performance may not be sufficiently achieved. If greater than 25 nm, transmittance is deteriorated and reflectance is increased, so that a feeling of openness may be deteriorated.

Referring to FIG. 1 and FIG. 2, the absorption layer 40, 40a, or 40b is a layer in contact with the metal layer 30, and serves to improve adhesion between the metal layer 30 and a dielectric layer, to prevent the movement of Na+ diffused from glass during heat treatment such as reinforcement and bending and O₂ in the air, to assist in the fusion of a metal to enable the stable behavior of the metal layer 30 even at high heat treatment temperatures, and finally to absorb O₂ that penetrates into the metal layer 30 to help maintaining low-emissivity properties.

For the absorption layer 40, 40A or 40B, one selected from Ni, Cr, and a Ni-Cr alloy may be used. When the Ni-Cr alloy is used, the alloy may have, for example, a composition of 75-85 wt% of Ni and 15-25 wt% of Cr. For the absorption layer 40, 40a, or 40B according to an embodiment of the present invention, a Ni-Cr alloy may be used.

The thickness of the absorption layer 40, 40a, or 40b may be 0.1-10 nm. When the thickness of the absorption layer 40, 40a, or 40b is less than 0.1 nm, durability may be deteriorated and the haze of a coating film may be increased after heat treatment and a bending process. When greater than 10 nm, transmittance may be lowered and the haze of a coating film may be increased after heat treatment and a bending process.

Referring to FIG. 1 and FIG. 2, the second dielectric layer 21 serves to block oxygen or ions delivered to the metal layer 30 during heat treatment such as reinforcement and bending. Like the first dielectric layer 20, the second dielectric layer 21 includes the main dielectric layer 21a, and may selectively have the sub-dielectric layer 21b formed on either an upper portion or a lower portion of the main dielectric layer 21a. According to one embodiment of the present invention, the sub-dielectric layer 21b may be formed on a lower portion of the main dielectric layer 21a as shown in (b) of FIG. 2, that is, between the main dielectric layer 21a and the absorption layer 40b.

The main dielectric layer 21a may be formed of an Si-based nitride or nitrogen oxide containing one or more elements selected from Al, B, Ti, Nb, Sn, and Mo, and the sub-dielectric layer 21b may be formed of a Zn-based oxide containing one or more elements selected from the group consisting of Sn, Nb, Al, Sb, Mo, Cr, Ti, and Ni. According to one embodiment of the present invention, the main dielectric layer 21a may be SiAlNₓ, wherein x is 1.3≤x≤1.5. If x is out of the above numerical range, the deposition rate may be deteriorated due excess nitrogen (N₂). The sub-dielectric layer 21b may be ZnAlOₓ, wherein x is 0.5≤x≤3. If x is out of the above numerical range, the deposition rate may be deteriorated due excess oxygen (O₂).

The thickness of the main dielectric layer 21a and the sub-dielectric layer 21b may be, independently, 5-70 nm. Specifically, the thickness of the main dielectric layer 21a may be 35-70 nm, and the thickness of the sub-dielectric layer 21b may be 5-20 nm. If the thickness of the main dielectric layer 21a is less than 35 nm or the thickness of the sub-dielectric layer 21b is less than 5 nm, durability may be deteriorated. If the thickness of the main dielectric layer 21a is greater than 70 nm, or the thickness of the sub-dielectric layer 21b is greater than 20 nm, transmittance may be reduced.

The coating layer 50 including Zr serves to protect the surface of low-emissivity glass according to the present invention, and materials with high mechanical strength, low surface roughness and high transmittance may be used as the coating layer 50.

The coating layer 50 including Zr may include Zr, or a composite metal of Zr and at least one selected from the group consisting of Si, Ti, Al, Cu, Fe, Ni, Pb, and Nb, and the coating layer 50 may include a nitride, an oxide, and a nitrogen oxide of Zr or the Zr composite metal. Specifically, the coating layer 50 may include at least one selected from the group consisting of ZrNₓ(for example, 0.5≤x≤2), SiZrNₓ(for example, 0.5≤x≤2), SiZrTiOₓ(for example, 0.5≤x≤3), SiZrAlNₓ(for example, 0.5≤x≤2), and ZrTiOₓN_{y}(for example, 0.5≤x≤3, 0.5≤y≤2). Here, when x or y is outside the numerical range, the deposition rate and density may be deteriorated.

The thickness of the coating layer 50 may be preferably 1-20 nm. If the thickness of the coating layer 50 is less than 1 nm, durability may be deteriorated. If greater than 20 nm, transmittance may be deteriorated or haze may be caused.

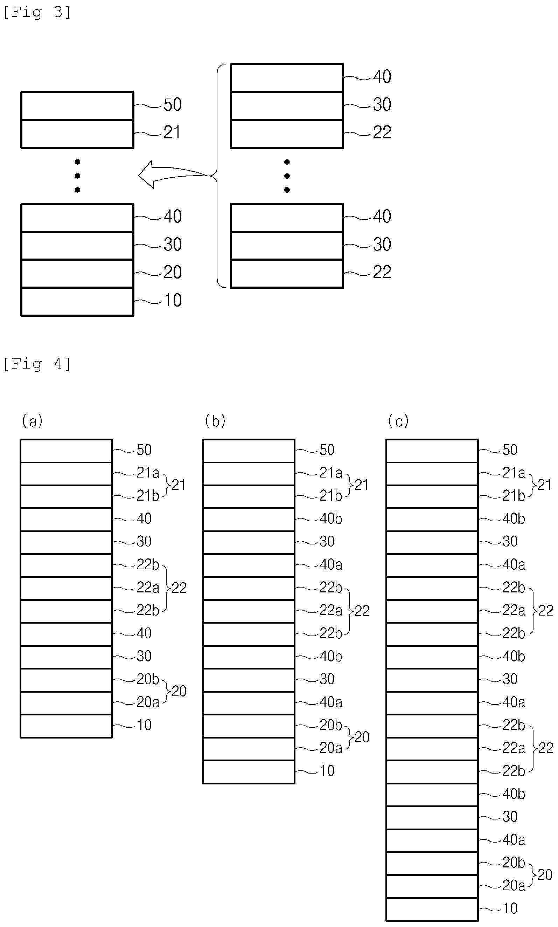

FIG. 3 is a view showing the laminated structure of multiple (for example, double or triple) low-emissivity glass of the present invention.

Referring to FIG. 3, the low-emissivity glass of the present invention may further include at least one multi-layered structure between the absorption layer 40 and the second dielectric layer 21 in the laminated structure of FIG. 1, the multi-layered structure sequentially including a dielectric layer 22, the metal layer 30, and the absorption layer 40 therein. When one multi-layered structure as described above is included in the single laminated structure as shown in FIG. 1, it referred to as double low-emissivity glass, and when two multi-layered structures are further included, it is referred to as triple low-emissivity glass.

Like the first dielectric layer 20 and the dielectric layer 21, the dielectric layer 22 serves to block oxygen or ions delivered to the metal layer 30 during heat treatment such as reinforcement and bending. Referring to (a) of FIG. 4, like the first dielectric layer 20 and the dielectric layer 21, the dielectric layer 22 includes the main dielectric layer 22a, and may selectively have the sub-dielectric layer 22b formed on either an upper portion or a lower portion dielectric layer main dielectric layer 22a.

At least one from among the multi-layered structures may further include at least absorption layer 41a between the dielectric layer 22 and the metal layer 30 as shown in (b) and (c) of FIG. 4.

Hereinafter, the present invention will be described in detail with reference to Examples.

However, the following Examples are merely illustrative of the present invention, and the present invention is not limited by the following Examples.

### [Examples]

### Example 1

Using a Magnetron sputter coater, low-emissivity glass was manufactured having a multi-layered coated film which has the composition and thickness shown in Table 1 below formed on a 6 mm transparent glass substrate.

A first dielectric layer (SiAINx, x=1.3-1.5) was coated under a nitrogen/argon (nitrogen ratio: 40 vol%) atmosphere, and an absorption layer (NiCr alloy) was coated under an argon 100% atmosphere, and a metal layer (Ag) was coated under an argon 100% atmosphere. Thereafter, the absorption layer (NiCr alloy) was coated on the metal layer (Ag) under an argon 100% atmosphere, a second dielectric layer (SiAINx, x = 1.3-1.5) was coated under a nitrogen/argon (nitrogen ratio: 40 vol %) atmosphere, and a ZRN layer was coated as a coating layer on a nitrogen/argon (nitrogen ratio: 40 vol %) atmosphere using a metal target to manufacture low-emissivity glass.

### Example 2

Low-emissivity glass was manufactured in the same manner as in Example 1 except that a ZrN layer was coated as a coating layer under a nitrogen 100% atmosphere using a metal target.

**[Table 1]**

| Exam ples | Film type (film thickness: nm) |
|---|---|
| 1 | Glass/SiAlNₓ(30 nm)/NiCr(0.3 nm)/Ag(10 nm)/NiCr(0.2 nm)/ SiAlNₓ(30 nm)/ZrN(N₂ 40%, 5 nm) |
| 2 | Glass/SiAlNₓ(30 nm)/NiCr(0.3 nm)/Ag(10 nm)/NiCr(0.2 nm)/ SiAlNₓ(30 nm)/ZrN(N₂ 100%, 5 nm) |

### [Comparative Examples]

### Comparative Example 1

Low-emissivity glass was manufactured in the same manner as in Example 1 except that, TiOxNy (x:y=3:1) layer was coated as a coating layer under a nitrogen/argon (nitrogen ratio: 40 vol%) atmosphere using a ceramic target.

### Comparative Example 2

Low-emissivity glass was manufactured in the same manner as in Example 1 except that, a ZrO layer was coated as a coating layer under an oxygen/argon (oxygen ratio: 50 vol%) atmosphere using a ceramic target.

**[Table 2]**

| Comparative Example | Film type (film thickness: nm) |
|---|---|
| 1 | Glass/SiAlNₓ(30 nm)/NiCr(0.3 nm)/Ag(10 nm)/NiCr(0.2 nm) / SiAlNₓ(30 nm)/TiOₓN_{y}(5 nm) |
| 2 | Glass/SiAlNₓ(30 nm)/NiCr(0.3 nm)/Ag(10 nm)/NiCr(0.2 nm)/ SiAlNₓ(30 nm)/ZrO(5 nm) |

### [Experimental Example]

The physical properties of the low-emissivity glass which was obtained in each of Examples and Comparative Examples were measured according to the following method, the results are shown in Table 3 below.

### Moisture resistance

One specimen coated with the low-emissivity glass manufactured in each of Examples and Comparative Examples was prepared to a size of 100 X 100 mm, and then placed in a constant temperature and humidity room (relative humidity 80±10%, temperature 30±2°C). After 24 hours of curing, the specimen was taken out at 1-day (24 hours) intervals and water was removed therefrom with a cloth to determine whether the specimen satisfies the size and number of a pinhole (Φ) and the following 1) to 3).
1) 4.0 mm ≤ Φ more than one not allowed
1) 2.0 mm ≤ Φ more than three not allowed
3) Front small pinhole not allowed

### Scratch resistance

### 1) General

One specimen coated with the low-emissivity glass manufactured in each of Examples and Comparative Examples was prepared to a size of 300 X 100 mm, and then the specimen was placed in Elcometer1720 with a coated surface thereof facing up so as to be brought into contact with a brush. Distilled water was applied on the coated surface of the specimen, and then a device was operated (200 times of brush round trip). After completion, water was removed from the specimen and visually confirmed to record a level. At this time, level evaluation criteria were as follows.
- 1 Level: No scratches
- 2 Level: 5 or less thin scratches of less than 0.1 mm in width
- 3 Level: 6 or more thin scratches of less than 0.1 mm in width
- 4 Level: 2 or less thick scratches of greater than 0.1 mm in width
- 5 Level: 3 to 5 thick scratches of greater than 0.1 mm in width
- 6 Level: 6 or more thick scratches of greater than 0.1 mm in width and coating film peeling occurred less than 1.0 mm in width
- 7 Level: Coating film peeling occurred more than 1.0 mm.

### 2) Quartz (harsh)

One specimen coated with the low-emissivity glass manufactured in each of Examples and Comparative Examples was prepared to a size of 400 X 100 mm, and then the specimen was placed in Erichsen Brush Tester with a coated surface thereof facing up so as to be brought into contact with a brush. Quartz powder solution was applied on the coated surface of the specimen, and then a device was operated (50 times of brush round trip). After completion, water was removed from the specimen and visually confirmed to record a level. At this time, grade evaluation criteria were the same as those of 1) general evaluation criteria.

### Cold resistance

One specimen coated with the low-emissivity glass manufactured in each of Examples and Comparative Examples was prepared to a size of 100 X 300 mm, and then 2.5 g of prepared artificial sweat reagent (containing 2.5 g of NaCl (99%), L-histidine hydrochloride·1 hydrate (99%), 1.25 g of sodium dihydrogen phosphate·12 hydrates (98%), and 500ml of DI water) was dropped on the coated surface of the specimen using a pipette. Thereafter, the specimen placed in a constant temperature and humidity room (relative humidity 80±10%, temperature 30±2°C). After placing the specimen, the state of the coated film was checked at a distance of 50 cm from the specimen at 1-hour intervals.

### Acid resistance

One specimen coated with the low-emissivity glass manufactured in each of Examples and Comparative Examples was prepared to a size of 50 X 100 mm, and then an HCl 1N solution was filled up to a 1/3 point in an experimental plastic container. Thereafter, the specimen was placed therein. The coated surface of the specimen was rinsed with distilled water at 1 hour intervals at room temperature, and then water was removed therefrom with a cloth. The state of the coated surface of the specimen was visually confirmed with the naked eye at a distance of 50 cm.

### Cleveland

One specimen coated with the low-emissivity glass manufactured in each of Examples and Comparative Examples was prepared to a size of 400 X 600 mm, and then the specimen was mounted such that a surface of the specimen coated with the low-emissivity glass faces the inside of a moisture condensation tester (which can maintain the temperature of a bath at 60±1°C). Thereafter, the specimen was fixed using a clamp. After 4 hours, the pinhole and damage of the coated surface was checked at 1 hour intervals.

**[Table 3]**

| Class ifica tion (Sing le) | Scratch resistance properties | | Cold resistanc e | Moisture resistanc e | Acid resistanc e | Cleveland (12 days later ΔE) |
|---|---|---|---|---|---|---|
| | Gener al | Quartz | | | | |
| Examp le 1 | 1 | 2 | 3 days | 20 days | 1 day | 4.1 |
| Examp le 2 | 1 | 2 | 3 days | 20 days | 1 day | 4.8 |
| Compa rativ e Examp le 1 | 2 | 3 | 4 hours | 20 days | 4 hours | - |
| Compa rativ e Examp le 2 | 1 | 3 | 4 hours | 20 days | 1 day | 19.9 |

## Claims

1. Low-emissivity glass comprising:
a glass substrate;
a first dielectric layer formed on the glass substrate;
a metal layer formed on the first dielectric layer;
an absorption layer formed on the metal layer;
a second dielectric layer formed on the absorption layer; and
a coating layer including Zr formed on the second dielectric layer.

2. The low-emissivity glass of claim 1, wherein the coating layer further comprises Zr, or a composite metal of Zr and at least one selected from the group consisting of Si, Ti, Al, Cu, Fe, Ni, Pb, and Nb.

3. The low-emissivity glass of claim 1 or claim 2, wherein the coating layer comprises a nitride, an oxide, and a nitrogen oxide of Zr or the Zr composite metal.

4. The low-emissivity glass of claim 1, wherein the coating layer is at least one selected from the group consisting of ZrNx(0.5≤x≤2), SiZrNₓ(0.5≤x≤2), SiZrTiOₓ(0.5≤x≤3), SiZrAlNₓ(0.5≤x≤2), and ZrTiOₓN_{y}(0.5≤x≤3, 0.5≤y≤2).

5. The low-emissivity glass of claim 1, wherein the thickness of the coating layer is 1-20 nm.

6. The low-emissivity glass of claim 1, wherein at least one from among the first dielectric layer and the second dielectric layer further comprises a main dielectric layer and selectively at least on sub-dielectric layer formed on either an upper portion or a lower portion of the main dielectric layer.

7. The low-emissivity glass of claim 6, further comprising an absorption layer between the first dielectric layer and the metal layer.

8. The low-emissivity glass of any one of claims 1 to 6, comprising at least one multi-layered structure between the absorption layer and the second dielectric layer, the multi-layered structure sequentially including a dielectric layer, a metal layer, and an absorption layer therein.

9. The low-emissivity glass of claim 8, wherein the dielectric layer further comprises a main dielectric layer and selectively at least on sub-dielectric layer formed on either an upper portion or a lower portion of the main dielectric layer.

10. The low-emissivity glass of claim 9, wherein the at least one multi-layered structure further comprises at least one absorption layer between the dielectric layer and the metal layer.

11. The low-emissivity glass of claim 6 or claim 9, wherein the sub-dielectric layer is formed of a Zn-based oxide containing one or more elements selected from the group consisting of Sn, Nb, Al, Sb, Mo, Cr, Ti, and Ni, and the main dielectric layer is formed of an Si-based nitride or nitrogen oxide containing one or more elements selected from Al, B, Ti, Nb, Sn, and Mo.

12. The low-emissivity glass of claim 1, wherein the metal layer is one or more selected from the group consisting of Ag, Cu, Au, Al, and Pt.

13. The low-emissivity glass of claim 1, wherein the absorption layer is a layer in contact with the metal layer and includes Ni, Cr, or a Ni-Cr alloy.
